# FASCICULE DE BREVET EUROPEEN

(11) **EP 0 930 156 B1**
(45) Date de publication et mention de la délivrance du brevet: **28.11.2001**
(21) Numéro de dépôt: 99105308.3
(22) Date de dépôt: 12.09.1994
(51) Int. Cl.: B32B 27/08, B32B 27/20, B60R 13/02

(54) **Produits composites servant de revêtement de sols ou de murs ou d'habillage intérieur dans le secteur automobile et procédé pour leur fabrication**
Verbundprodukte als Fussbodenbeläge, Wandbekleidungen oder Innenverkleidung im Automobilsektor und Verfahren zu ihrer Herstellung
Composite products used as floor or wall coverings or as inner trim in the car industry, and methods of manufacture

(30) Priorité: 10.09.1993 BE 9300955
(43) Date de publication de la demande: 21.07.1999
(62) Demande divisionnaire de: 94924656.5
(73) Titulaire: Tarkett Sommer S.A., 92748 Nanterre Cedex (FR)
(72) Inventeur: Bastin, Pierre, 6600 Bastogne (BE); Lacroix, Paul, 6600 Bastogne (BE)
(74) Mandataire: Van Malderen, Michel

(56) Documents cités:
- EP-A- 0 146 349
- GB-A- 2 019 315
- US-A- 4 333 981
- US-A- 4 824 726
- DATABASE WPI Week 8403 Derwent Publications Ltd., London, GB; AN 84-014816 (03) XP002114284 & JP 58 208021 A (KYORAKU KK), 3 décembre 1983 (1983-12-03)
- DATABASE WPI Week 8135 Derwent Publications Ltd., London, GB; AN 81-63123D (35) XP002114285 & JP 56 084956 A (SUMITOMO CHEMICAL KK), 10 juillet 1981 (1981-07-10)
- DATABASE WPI Week 9333 Derwent Publications Ltd., London, GB; AN 93-261311 (33) XP002114286 & JP 05 177794 A (NIPPON PETROCHEMICALS CO LTD), 20 juillet 1993 (1993-07-20)

## Description

### Objet de l'invention

La présente invention porte sur des produits composites, présentant des propriétés améliorées en vue de permettre leur utilisation comme revêtements de sols ou de murs ainsi que pour l'habillage intérieur dans le secteur automobile, tels que des tapis automobiles et des tableaux de bord.

Elle concerne également un procédé permettant l'obtention de tels produits.

### Arrière-plan technologique

Les revêtements de sols et de murs du type tapis thermoplastique ont connu un développement important.

Ces produits sont en fait des multicouches constituées par un support ayant reçu une enduction d'une couche pourvue d'un décor sur laquelle on applique une couche dite d'usure, c'est-à-dire une couche offrant entre autres propriétés, une résistance suffisante aussi bien mécanique que physico-chimique.

Généralement (mais non exclusivement), les produits présentent un effet de relief obtenu par l'inhibition locale d'agents de moussage.

En plus de la propriété de transparence de la couche d'usure qui est très souvent souhaitée, cette couche d'usure doit présenter une bonne résistance mécanique, être stable aux agents physico-chimiques notamment pour résister aux détergents et avoir une bonne tenue thermique.

Parmi les exigences supplémentaires à respecter on peut citer l'absence aussi large que possible de composés volatils, la possibilité de recyclage du produit lors de son remplacement ce qui exclut le recours à la plupart des produits dits thermodurcissables ou caoutchoutiques (donc réticulés), une adhésivation aisée sur d'autres supports, une absence de retrait différentiel des différentes couches lors du refroidissement (ce qui permet d'éviter le phénomène du "Curl" ou déformation par enroulement spontané), un bon comportement lors du moussage, en particulier la possibilité d'inhiber localement la mousse dans les couches et bien entendu la possibilité du formage des couches assemblées et le maintien de leur adhésion.

Des préoccupations similaires existent également pour les feuilles thermoformables mises en oeuvre pour la réalisation d'éléments dits d'habillage intérieur de l'habitacle dans le secteur automobile.

Là aussi, on souhaite en plus du caractère thermoformable du produit, qu'il soit aisément recyclable et que la "peau" extérieure, généralement qualifiée de couche d'usure, présente de bonnes propriétés de résistance mécanique et chimique, liées à un aspect agréable.

Il est particulièrement évident que l'aspect: facilité de mise en oeuvre du composite doit être pris en compte dans le rapport qualité/prix du produit fini.

Il est très utile en effet de pouvoir disposer d'un procédé de fabrication qui ne nécessite pas notamment :
- de séchage préalable intense d'une ou de plusieurs couches (ou de constituants de ces couches);
- de traitement des couches à assembler par une adhésivation préalable de l'une d'elles;
- de conditions d'assemblage des couches sous des pressions ou sous l'effet de températures élevées ou de durées importantes;
- d'exclusion d'une catégorie particulière de matière d'une même famille (ce qui aurait comme inconvénient de se limiter dans les caractéristiques du produit fini).

Actuellement, le PVC plastifié constitue la référence en couche d'usure thermoplastique et également en sous-couche (qualifiée ci-après de couche sous-jacente) et les produits de substitution doivent présenter des propriétés au moins comparables.

L'intérêt du PVC est que ce polymère est non cristallin et qu'il présente par conséquent une excellente transparence.

De plus, il existe de nombreux dipôles dans la chaîne de polymères qui induisent une excellente cohésion entre les chaînes du polymère. Il en résulte des propriétés très favorables de hautes limites élastiques (sous contraintes élevées) et par conséquent il faut appliquer une contrainte de cisaillement très élevée pour arriver à provoquer une déformation permanente ou une rupture locale par "griffures" du produit, ce qui est la condition nécessaire pour créer une altération visible de la surface c'est-à-dire, dans le cas qui nous intéresse, l'usure par abrasion ou griffure du produit.

La présence du chlore implique une excellente résistance aux différentes agressions physico-chimiques qui sont imposées aux produits après sa pose.

Un intérêt complémentaire du PVC est que le cycle de transformation de celui-ci est un cycle thermoplastique particulièrement avantageux à mettre en oeuvre.

Il permet aussi de réaliser aisément un moussage dit "chimique" d'une couche choisie, par décomposition d'agents moussants du type azodicarbonamide ou dérivés avec libération de composants gazeux en prévoyant une inhibition locale de la mousse, ce qui permet pour l'application comme revêtement de sols en particulier, une grande richesse et profondeur des décors. Ceci s'obtient en "bloquant chimiquement" l'expansion de manière locale à l'aide de groupements acides du type TMA par exemple déposés (généralement en les incorporant dans des encres) en surface des zones dans lesquelles on souhaite inhiber le moussage. En réalité, lors d'un moussage chimique, la libération du gaz est fortement accélérée par des "catalyseurs" appelés aussi "kickers" (p.ex. de l'oxyde de zinc). Il semblerait que les groupements acides viennent "complexer" l'activateur ce qui le rend localement inefficient avec comme conséquence le non-moussage à cet endroit. Les produits obtenus par cette technique dite "CUSHION FLOOR" sont largement répandus pour le revêtement de sols.

Actuellement, des raisons essentiellement liées à la protection de l'environnement militent en faveur du remplacement du PVC par d'autres polymères ne contenant pas de constituants du type chlorés ou azotés.

On a donc d'abord cherché des substituts dans les familles apparentées avec les polyoléfines, à savoir des polyéthylènes et polypropylènes (PEBD, PEHD, LLDPE et PP, soit sous forme d'homopolymères soit sous forme de copolymères).

On constate que pour obtenir de bonnes propriétés en limite élastique (ainsi que de bonnes résistances aux contraintes physico-chimiques), il faut s'orienter vers des polymères fortement cristallins de ces familles. Cependant, cette forte cristallinité a pour conséquence que les produits ne sont généralement pas transparents.

De manière générale, une forte cristallinité entraîne une série d'inconvénients qui. sont liés au fait que les potentiels d'adhérence sont réduits à cause de la présence de la phase cristalline. De plus, lors du refroidissement et de la cristallisation qui s'en suit, un important problème de retrait différentiel (par exemple apparition de "curl") se manifeste. En particulier, lors de l'assemblage avec d'autres couches ce problème est encore accentué par le fait que ces produits ont des modules de Young d'autant plus élevés que le produit est cristallin.

Afin de trouver une solution à ces difficultés, le recours à des copolymères a été envisagé.

Lorsque l'on utilise des copolymères de l'éthylène avec par exemple l'acétate de vinyle (EVA), le propylène (EPDM), l'acrylate de butyle (EBA), l'acrylate de méthyle (EMA), des oléfines tels que l'octène, l'hexène, le butène etc..., ou lorsque l'on utilise des comonomères avec du propylène ou d'autres monomères, on observe effectivement que la cristallinité diminue quelque peu, ce qui agit favorablement sur la transparence.

Cependant, on constate également simultanément une diminution relativement importante du point du fusion, ce qui entraîne une mauvaise tenue thermique, une diminution de la résistance chimique, et une diminution d'autres propriétés physiques en particulier la valeur de contrainte à la limite élastique, cet ensemble de défauts étant défavorable pour le comportement à l'usure.

De manière générale, on observe cependant que pour obtenir une bonne adhérence, entre différentes couches, il faut éviter que la couche sous-jacente soit trop chargée. En effet, du fait que l'adhérence s'effectue en fait de polymère à polymère, une adhésion convenable ne peut être obtenue lorsque la charge perturbe ce phénomène. En d'autres mots, la disponibilité volumique des polymères est essentielle.

Dans un polymère, la présence d'une fraction cristalline entraîne de sérieuses difficultés pour la faire adhérer à d'autres substrats puisque la fraction cristalline rejette par définition la structure qui ne lui est pas identiquement semblable.

Cette restriction d'adhésivité sur des supports chargés constitue une caractéristique gênante, car elle empêche de réduire le prix de revient du produit en utilisant une quantité importante de charges dans la couche sous-jacente.

Les produits à cristallinité réduite précités présentent également l'inconvénient de présenter une résistance chimique réduite et une perméabilité plus élevée. En effet, lorsque la couche sous-jacente est chargée, il est utile d'y introduire des additifs du type lubrifiants et plastifiants afin de faciliter leur mise en oeuvre et d'obtenir de bonnes propriétés mécaniques de la couche sous-jacente. Ceci accroît donc le risque de migration de ces additifs au sein de la couche d'usure.

Une telle migration entraîne un risque d'exsudation de ces additifs leur conférant un aspect inacceptable et/ou une chute de la contrainte qui correspond à la limite élastique, c'est-à-dire une perte de résistance à l'usure.

En outre, la migration entre les couches d'éléments du type lubrifiants et/ou plastifiants, change le volume des couches concernées : la couche qui perd des éléments voit son volume diminuer alors que la couche adjacente qui absorbe l'élément voit son volume s'accroître. Il en résulte dans ce cas l'apparition du "curl" et/ou de tensions internes élevées inacceptables pour les qualités requises.

Dans le cas d'une utilisation dans l'habillage intérieur des habitacles de véhicules automobiles en particulier, la volatilisation des constituants lubrifiants et plastifiants de la couche sous-jacente au travers de la couche d'usure provoque un phénomène de "fogging", c'est-à-dire un dépôt "gras" difficile à éliminer sur les vitres.

En fait, la plupart des inconvénients précités sont dûs au fait que la chute de cristallinité n'est pas compensée par une amélioration de la cohésion ou des inter-actions entre les chaînes polymères au sein de la phase amorphe. Le choix d'un produit répondant aux exigences contradictoires précitées est donc particulièrement difficile.

### Etat de la technique

Le document GB-A-2019315 décrit une technique particulière de production de dalles décoratives de revêtements de sols dans lequel on mentionne la possibilité de réaliser une couche d'usure notamment en résine d'ionomère de type "SURLYN" (marque commerciale)(page 3, lignes 32-35) sur une couche de matière thermoplastique (page 2, lignes 60-63).

DATABASE WPI Week 9333 Derwent Publications Ltd., London GB; AN 93-261311 (33) XP002114286 & JP 05 177794 A (NIPPON PETROCHEMICALCS CO LTD), 20 juillet 1993 (cf. abrégé) découvre une feuille ignifuge constituée d'une couche de résine d'ionomère et d'une couche sous-jacente d'une matière de la résine polyoléfine (100 parties en poids) et 20-200 parties en poids d'ignifuges inorganiques. La feuille ignifuge sert de revêtement de sols, de murs ou d'habillage intérieur dans le secteur automobile.

Le document US-A-4 333 981 décrit un produit destiné au revêtement de sols et de murs d'étables, d'écuries et similaires comportant une fine couche imperméable aux liquides formée d'une couche d'ionomères qui est appliquée sur une couche d'une résine moussée. Il apparaît (colonne 5, lignes 61 à 66) que la mousse est une mousse dite "physique" obtenue à l'aide d'hydrocarbures halogénés.

Le document US-A-3 749 629 décrit une feuille décorative composite comportant des particules dans une matrice. Cette matrice peut être formée, entre autres d'une résine du type ionomère.

Le document EP-A-0 146 349 décrit un produit composite stratifié, utilisable dans le secteur de l'automobile, constitué d'une résine ionomère partiellement neutralisée et d'un polymère oléfinique partiellement réticulé en vue d'obtenir un produit présentant de bonnes propriétés de surface, notamment de résistance mécanique. La technique utilisée explique l'usage d'un agent de réticulation du type peroxyde organique. Cette méthode est assez compliquée. Elle est longue et nécessite de nombreuses étapes de production (voir page 9, exemple 1), à savoir :
- précompoundage de polymères susceptibles de réticuler avec les peroxydes et de polymères qui ne se réticulent pas avec les peroxydes, plus des additifs,
- passage dans un mélangeur interne type BANBURY,
- passage sur mélangeur externe,
- découpe des granules,
- fabrication d'une solution de peroxydes (et de co-agents),
- répartition uniforme de cette solution sur les granulés (à l'aide d'un mélangeur type HENSCHEL),
- les granules sont ensuite extrudés à 210°C durant 2 minutes afin de réaliser le traitement dynamique à la chaleur (par décomposition des peroxydes),
- co-extrusion de l'ionomère (à 200°C) et de l'élastomère (à 230°C)
- assemblage à l'état fondu des deux constituants en deux couches.

Il faut encore y ajouter les contraintes suivantes :
- il est spécifié qu'il faut travailler à tous les stades de la fabrication sous atmosphère d'azote (en effet, on sait que l'oxygène est un inhibiteur puissant de l'activité des peroxydes).
- nécessité d'assembler les deux couches simultanément à l'état fondu.
- il faut absolument veiller à ce qui ni l'élastomère, ni l'ionomère ne contiennent d'humidité (sinon l'adhérence entre les couches chute de 50%); c'est d'ailleurs une autre raison pour travailler sous atmosphère d'azote afin que l'humidité de l'air ne vienne pas interférer avec l'adhérence.

De plus, il apparaît d'une comparaison des adhérences avec un ionomère ordinaire (neutralisation à l'aide d'ions sodium) que dans ce cas, les adhérences ont chuté de 90 % (voir tableau 2, page 16).

Abstraction faite de la complexité du procédé et des moyens de production, il y a donc de grandes restrictions pour obtenir des adhérences correctes de la couche d'ionomère sur l'élastomère. A la page 7, il est d'ailleurs signalé que les ions magnésium sont préférables aux ions sodium comme ion métallique pour former le sel.

En pratique on observe cependant qu'il est très difficile d'assurer une bonne adhérence des résines ionomères à la plupart de substrats polymères autres qu'ionomères. D'ailleurs dans le document précité US-A-3 979 540, on décrit pour l'habillage de véhicules automobiles le fait que dans le cas notamment des mousses de polyoléfines utilisées comme substrat, il est nécessaire d'utiliser une substance adhésive (colonne 2, lignes 15 à 17) pour coller la couche d'ionomères à la mousse de polyoléfine non-ionomère. La couche moussée est une mousse physique.

Dans la pratique industrielle, en particulier pour des produits du type revêtements de sols ou de murs ou encore d'habillage intérieur de véhicules automobiles, une étape de production supplémentaire impliquant un collage occasionne des dépenses de fabrication prohibitives.

En fait, on s'aperçoit que l'utilisation d'ionomères dans la couche d'usure dans des conditions opératoires utilisées jusqu'à présent pour les produits à base de PVC ou envisagées pour leurs substituts, c'est-à-dire essentiellement par enduction de plastisol (pour les revêtements de sols ou de murs), en particulier combinée avec un moussage localisé ou non de la couche sous-jacente, après application de la couche d'usure dans un four ou encore par calandrage (dans le cas de la production de feuilles pour l'habillage dans le secteur automobile) provoque d'importantes difficultés.

Ces difficultés résultent notamment de la nature même des ionomères. En effet, il s'agit de polymères présentant des indices de viscosité, en particulier des valeurs de fluidité à l'état fondu (MFI ou Melt Flow Index) peu compatibles avec de telle technique. De plus, par suite de la présence d'acide carboxylique dans leur structure ils présentent des propriétés collantes sur les parties métalliques des outils de production, gênant leur mise en oeuvre et dans le cas d'un moussage différentiel ces groupes carboxyliques interfèrent avec des inhibiteurs locaux du moussage.

### Buts visés par la présente invention

La présente invention vise à offrir un produit du type précité et un procédé pour sa fabrication, présentant des propriétés améliorées lorsqu'on les compare aux produits et procédés connus.

Plus précisément, la présente invention vise à développer un produit comportant une couche d'usure et au moins une couche sous-jacente conformes aux propriétés actuelles du PVC mais qui ne présente pas, ou dans lequel sont fortement atténués, les inconvénients précités, en particulier ceux des substituts proposés jusqu'à présent pour le PVC.

A titre complémentaire, la présente invention vise à proposer une couche d'usure qui soit compatible avec la mise en oeuvre des couches sous-jacentes constituées d'un substitut du PVC qui dans le processus de sa mise en oeuvre n'entraîne pas des difficultés considérables. On vise tout particulièrement de permettre l'utilisation de techniques de mise en oeuvre similaires à celles utilisées actuellement pour les produits à base de PVC, en particulier par des techniques dites de moussage différentiel.

De plus, on vise à obtenir un produit dans lequel la couche d'usure présente un effet "barrière" à l'égard des lubrifiants et plastifiants inclus dans la couche sous-jacente à la couche d'usure pour éviter leur migration en surface et leur évaporation, tout en préservant la facilité de mise en oeuvre précitée.

### Eléments caractéristiques de l'invention

L'invention repose sur le fait qu'il est possible de répondre aux exigences contradictoires précédemment décrites pour la couche d'usure et pour la couche sous-jacente en obtenant un produit de bonne qualité sans difficultés majeures de production, en particulier un produit garantissant à la fois une bonne adhérence entre la couche d'usure (même fortement chargée) et la couche sous-jacente à cette couche d'usure, en assurant aussi l'effet barrière de la couche d'usure aux lubrifiants et aux plastifiants, éventuellement en combinaison avec la possibilité d'exécuter un moussage différentiel chimique par le choix pour les applications envisagées de produits selon la revendication 1.

De préférence la couche d'usure comporte au moins 25 % en poids d'ionomères ou de précurseurs de tels ionomères.

Selon un mode d'exécution préféré de l'invention, ces produits peuvent également contenir un lubrifiant et/ou un plastifiant et le cas échéant d'autres constituants.

Dans la couche sous-jacente, la quantité de charge est essentiellement fonction des applications envisagées.

Pour les produits de revêtements de sol avec mousse, les valeurs sont principalement comprises, en poids, entre 25 et 200 (généralement entre 35 et 70) parties pour cent parties de polymère, mais on peut atteindre des valeurs de 600 parties et même plus pour cent parties de polymère pour des revêtements sans mousse et/ou pour une application d'habillage d'habitacle dans le secteur automobile.

De manière surprenante on observe que contrairement au cas des polymères classiques, la présence de charge dans la couche sous-jacente favorise une bonne adhésion des ionomères (et précurseurs) avec la couche sous-jacente.

Sans prétendre donner une explication scientifique, il est possible dans le cas de couches moussées chimiquement que l'on puisse descendre à des taux aussi bas que 30 % de charges parce que la complexion par les acides et des catalyseurs d'expansion présents dans le porogène impliquerait la création d'interactions entre la couche d'usure ionomère et celle de la couche sous-jacente chargée au travers des "kickers" (ce qui pourrait avoir comme conséquence l'augmentation du potentiel d'adhérence constaté d'après les essais faits par la Demanderesse).

Lorsqu'on ne souhaite pas obtenir des résistances à la rayure exceptionnelles, l'effet surprenant apporté par la charge permet également d'envisager d'améliorer l'adhérence de couches sur des supports très chargés en utilisant des quantités moindres d'ionomères ou précurseurs dans la couche de surface. Par exemple, on peut mettre un ionomère en faible quantité avec une fluidité plus importante que les autres polymères. Par suite de sa fluidité, l'ionomère viendra se mettre préférentiellement en surface de la couche à adhésiver (par effet de "lubrification forcée" sur les outils de production). Il en résultera une concentration localement plus importante des ionomères en surface de la couche, ce qui pourrait amener à obtenir des adhérences semblables à celles que l'on mesurerait si on avait un taux plus élevé d'ionomère plus visqueux dans la couche de surface.

On observe non seulement que ce type de produit se caractérise par une bonne adhérence entre la couche d'usure et la couche sous-jacente et que l'effet barrière de la couche d'usure freine fortement la migration des lubrifiants et/ou plastifiants contenus dans la couche sous-jacente mais encore qu'il n'y a pas de retrait différentiel donc pas de "curling" entre les couches, phénomène auquel on aurait pu s'attendre du fait qu'un produit sous-jacent fortement chargé présente peu de retrait alors qu'une couche d'usure de cristallinité relativement élevée est affectée d'un retrait important dans la plupart des cas.

D'autres caractéristiques techniques spécifiques préférées de l'invention sont reprises dans les revendications 2 à 8 pour ce qui concerne les produits, les revendications 9 et 10 pour ce qui concerne les procédés mis en oeuvre et 11 et 12 pour les applications.

Avantageusement, pour répondre au souci de protection de l'environnement, les couches sous-jacentes à la couche d'usure ainsi que la couche éventuelle dite d'apprêt sont réalisées en produits de substitution du PVC tels que ceux qui ont été largement décrits dans des publications récentes à savoir notamment WO90/06233, WO092/19562 et EP- 0 381 971. L'EVA est particulièrement intéressant pour cet usage du fait de ses caractéristiques de haute absorption de charges pour un prix de polymère relativement réduit et de la possibilité de transposer les cycles de transformations existants sur les machines de production de PVC (par exemple extrusion et calandrage).

Cependant, le LLDPE et le VLDPE (polyéthylènes linéaires basse densité et polyéthylènes linéaires très basse densité) ont également des caractéristiques intéressantes (haute tenue thermomécanique). Egalement les EPDM et EMA (éthylènes-acrylate de méthyle) par exemple peuvent convenir mais ils ont cependant l'inconvénient d'être chers.

L'homme de l'art pourra également choisir judicieusement d'autres polymères pouvant entrer dans la constitution des supports chargés, en fonction des caractéristiques finales visées.

On considère que les "cristaux éthyléniques" constituent une phase cristalline séparée. Le reste se partage entre une phase amorphe éthylénique (partie des groupements éthyléniques qui n'ont pas cristallisés) et des agrégats ioniques. On peut cependant s'interroger sur le fait que ces agrégats sont amorphes ou cristallins. De manière peut-être un peu abusive, on considère que les agrégats ioniques sont dans une phase amorphe, puisqu'ils ne sont pas dans les "cristaux éthyléniques". On remarque que les mêmes raisonnements s'appliquent au cas des polypropylènes copolymères avec l'anhydrite maléique par exemple.

La définition des ionomères peut être retrouvée dans l'ouvrage : « Macromolécules Reviews, Vol 16, 41-122 (1981) » sous le titre "The Structure and Properties of Ionomers" par W.J. Machnight and T.R. Earnest Jr ainsi que dans les documents US-A-3 264 272 et 3 322 734.

Il s'agit de polymères à chaîne hydrocarbonée contenant des groupes acides (carboxyliques) latéraux qui sont neutralisés partiellement ou complètement pour former des sels. Ces produits sont différents des copolymères statistiques dérivés de l'acide acrylique de par leur structure et leur neutralisation sous forme de sels des groupements carboxyliques.

Par définition, les ionomères sont des produits qui ont très souvent de hauts potentiels de transparence qui présentent toujours des liens ioniques (résultant de la neutralisation de 2 groupements acides).

La présence de groupements acides dans la chaîne de polymères introduit localement une irrégularité de structure.

Cette irrégularité empêche localement la cristallisation des macromolécules.

Par conséquent, les sites ionomères et acides (ou anhydrides) se situent toujours obligatoirement dans la phase amorphe du polymère.

Les sites acides organiques ont de manière bien connue la faculté de créer des liens (ponts) hydrogènes entre 2 chaînes de polymères.

Ces liens ont donc pour effet d'augmenter la cohésion au sein de la phase amorphe.

Dans le cas des ionomères, les liens ioniques créés sont encore plus élevés que des liens hydrogènes, ce qui augmente encore sensiblement la cohésion locale des macromolécules au sein de la phase amorphe.

Il faut savoir que les liens hydrogènes et ioniques sont thermoréversibles c'est-à-dire qu'ils disparaissent progressivement aux très hautes températures.

Dans le cas des ionomères, on appelle précurseur, un polymère ayant des groupements acides ou anhydrides mais dont les fonctions n'ont pas été neutralisées.

De manière semblable au PVC, on dispose donc de polymères fonctionnels qui ont des liens élevés au sein de la phase amorphe tout en étant thermoplastiques.

La chute de cristallinité que l'on observe pour ces composés comme, de manière générale pour les copolymères, est généralement compensée par une augmentation des interactions au sein de la phase amorphe. En pratique, il est possible d'obtenir des produits dont les inconvénients résultant d'une chute de cristallinité sont largement compensés par l'augmentation des liens au sein de la phase amorphe.

De plus, la transparence peut être obtenue pour des taux faibles du monomère apportant la fonction acide dans le copolymère mis en oeuvre. Par exemple des résultats satisfaisants sont déjà atteints avec des teneurs aussi faibles que 10% d'acide acrylique dans la résine du précurseur du futur ionomère tout en gardant une cristallinité suffisamment forte pour maintenir un point de fusion proche de 100°C conjointement avec les autres caractéristiques intéressantes des ionomères (transparence, résistance à l'abrasion, résistance chimique etc.).

Le point de fusion reste proche de l'homopolymère (c'est à dire sans monomère acide ou anhydride) puisque la teneur du monomère ionique peut être faible dans le copolymère utilisé, tout en gardant d'excellentes propriétés de transparence.

On observe également de manière générale une résistance chimique améliorée par rapport à l'homopolymère.

La plupart des propriétés physiques sont notablement améliorées dans un sens favorable à la résistance à l'usure.

Un aspect particulièrement important de l'invention est lié aux techniques de moussage en particulier de moussage différentiel utilisé de manière classique pour les revêtements de sol.

Avec les polymères classiques comportant des sites acides ou anhydrides, on vérifie aisément que l'on ne peut pas mousser la couche sous-jacente lors du traitement thermique ultérieur à l'application d'une couche d'usure comportant de tels sites, ce qui est logique puisqu'il est connu que les acides inhibent le moussage de l'azodicarbonamide ou d'autres porogènes de même mode d'action chimique.

On a observé le phénomène surprenant que la présence d'une couche d'usure du type ionomère ou précurseur d'ionomère n'empêche pas le moussage de ses couches adjacentes, alors qu'une couche PVC inhibée par des acides empêche le moussage des couches adjacentes.

En d'autres mots, la présence des groupements acides du type ionomère en couche d'usure n'est pas, contrairement à ce qu'on avait pu penser, un frein à l'expansion chimique de la ou des couches inférieures.

Ceci est d'autant plus surprenant que l'on constate qu'il est possible d'inhiber localement une couche sous-jacente (par exemple à base d'EVA) en contact d'une couche ionomère ou d'un précurseur par dépôt local d'inhibiteurs classiques contenus par exemple dans une encre d'impression.

Un effet particulièrement fondamental, surprenant et paradoxal est l'observation que les potentiels d'adhérence sont très élevés alors que la simple lecture des publications US-A-3979540 et EP-A-0 146 349 apporte un enseignement éloignant de la possibilité d'obtenir des adhérences élevées d'ionomères sur des couches sous-jacentes de nature différente. Par rapport aux copolymères classiques, on constate que l'adhérence est même possible sur des supports fortement chargés, ce qui permet de combiner la technique de l'invention avec la réalisation de revêtements de sols tels que décrits dans le document WO92/19562.

Malgré la diminution du volume de polymères disponibles résultant de la présence de grandes quantités de charges dans la couche sous-jacente recevant la couche d'usure, on observe que contrairement aux polymères classiques résistants à l'abrasion de manière satisfaisante (par exemple le copolymère statistique propylène-éthylène ELTEX KL 001 P (cité dans la publication WO 90/06233), les adhérences restent excellentes entre cette "couche sous-jacente" et la couche d'usure. Sans que la Demanderesse entende se limiter à une explication, elle pense que les sites acides de la couche d'usure comportant un ionomère selon l'invention peuvent également créer des interactions avec la charge située dans les couches sous-jacentes. En conséquence, même en présence des grandes quantités de charge dans la couche sous-jacente, les adhérences élevées peuvent être facilement obtenues.

On constate également que le produit de ce type, c'est-à-dire à potentiel d'adhérence élevé, présente cependant une résistance améliorée aux agents chimiques, même lorsqu'on les compare au PVC.

L'absorption des additifs (lubrifiants et huiles) qui sont utilisés selon l'invention afin d'améliorer la processabilité et les caractéristiques finales de la couche sous-jacente, en particulier en présence de quantités importantes de charges par des couches adjacentes et leur migration sont particulièrement faibles alors que ce n'est pas le cas pour les copolymères classiques cités.

On peut donc maintenir aisément des caractéristiques, en particulier des limites élastiques favorables ce qui autorise l'emploi de la couche d'usure selon l'invention même au contact de couches lubrifiées et plastifiées.

On est donc parvenu à concilier les exigences de disposer de polymères qui sont transparents qui ne présentent pas de problèmes de retraits au refroidissement et de difficultés d'adhérence (avec les supports chargés, lubrifiés et/ou plastifiés), et ayant des tenues à chaud élevées.

De plus, les inconvénients auxquels il fallait s'attendre sont des suivants:
- perte de tenue à la température;
- perte notable de comportement à l'usure (limite élastique);
- perte de résistance aux agents physico-chimiques (par exemple migration d'additifs des couches sous-jacentes);
- potentiel réduit d'adhérence sur les couches sous-jacentes chargées;
- augmentation des problèmes de retrait en particulier de retrait différentiel;
- grande difficulté de moussage chimique d'une couche adjacente à cause de la présence de groupements acides dans la couche d'usure.

Au contraire, on observe que l'utilisation des ionomères et précurseurs (comparés aux copolymères classiques) permet d'obtenir :
- l'amélioration de la transparence;
- l'amélioration de la tenue de température;
- l'amélioration exceptionnelle de la résistance à l'usure;
- l'amélioration notable de la résistance aux agents physico-chimiques;
- la possibilité de mousser chimiquement les couches adjacentes (malgré la présence d'acide dans la couche d'usure);
- la possibilité d'inhiber localement la mousse de manière classique malgré la présence de groupements acides dans la couche d'usure;
- le potentiel d'adhérence élevée même sur les couches sous-jacentes chargées;
- l'absence de problème de retrait différentiel au refroidissement malgré le fait que l'on peut être plus cristallin que pour les copolymères classiques transparents.
- des couches à haut pouvoir d'adhérence qui ont une tendance très réduite à absorber les huiles et lubrifiants des couches sous-jacentes.

L'invention sera décrite plus en détail en référence à des exemples d'exécution donnés à titre d'illustration, sans caractère limitatif.

### Exemple 1. Revêtement de sol moussable

On réalise une couche sous-jacente EVA moussable avec en sandwich un voile de verre (par calandrage et/ou par extrusion). La formule est la suivante :

| | |
|---|---|
| EVA * | 100 parties |
| Craie | 40 parties |
| Stéarine | 0,2 parties |
| DINP | 2 parties |
| GENITRON ** SCE | 1.75 parties |

| | |
|---|---|
| * : mélange d'EVA à 19 à 28 % d'acétate de vinyle | |
| ** : Azodicarbonamide "kickerisé" (contenant un ***activateur*** de ***décomposition*** du porogène). | |

Le compoundage se fait aisément à l'aide d'un mélangeur interne et se calandre vers 100°C.

On imprime la couche sous-jacente EVA (avec éventuellement des inhibiteurs dans une encre). Ensuite, on extrude une feuille d'ionomère (Iotek 7030) par exemple à l'aide d'une filière plate "ou extrusion soufflage".

L'Iotek 7030 est un ionomère neutralisé à l'aide de cation zinc et de MFI=3 (le précurseur a un MFI d'environ 35 et un taux d'acide acrylique d'environ 15 %).

L'extrusion se fait à des températures d'environ 200°C. L'épaisseur est par exemple de 0,3mm.

On profite de l'extrusion de la feuille ionomère transparente pour doubler les couches sous-jacentes moussables imprimées simplement sans nécessité de pression élevée. A ce moment on observe déjà une bonne adhésion entre la couche d'ionomère et la couche sous-jacente proche de la limite de rupture au niveau de la couche sous-jacente. L'adhérence dépend de la vitesse, de la température et de la pression du contact. Néanmoins, il peut être judicieux de mettre une pression suffisamment basse pour qu'il n'y ait pas de déformation ni de la couche d'usure, ni de la couche sous-jacente imprimée, ce qui assurera un profil régulier du produit. Dans ce cas, il n'est donc pas nécessaire d'avoir des adhérences élevées lors du doublage.

On passe le complexe dans un four pour expanser la mousse vers 190°C et on constate que l'adhérence est très élevée après l'expansion de la mousse (adhérence supérieure à la cohésion de la mousse). L'inhibition a été obtenue uniquement aux endroits où il y avait dépôt préalable d'encre inhibitrice.

### Exemple 2. Tapis thermoplastique recyclable thermoformable

On extrude la couche d'usure suivante :

| | | |
|---|---|---|
| Iotek 3110 | 50 parties | (hautement cristallin-ionomère) |
| Iotek 8000 | 25 parties | (haute résistance avec huiles ionomères) |
| Yparex 8104E | 25 parties | LLDPE greffé anhydride maléique |
| Pigments | à façon | |

L'Iotek 3110 est un ionomère neutralisé au sodium et de MFI= ± 1,5. Son précurseur a un MFI d'environ 10 et un taux d'environ 10 % d'acide acrylique.

L'Iotek 8000 est un ionomère neutralisé au sodium et de MFI ± 1. Son précurseur a un MFI ± 35 et un taux ± 15 % d'acide acrylique.

L'YPAREX 8104 E est un LLDPE greffé anhydride maléique (± 2,5 %).

L'extrusion peut se faire par exemple à l'aide d'une bi-vis munie d'une filière plate. La filière est à environ 200°C (épaisseur du film par exemple ± 0,5mm). (Bien entendu, lorsque la couche d'usure sera pigmentée, on pourra selon le désir introduire un peu de charge minérale ainsi que des matifiants éventuels (comme la silice pyrogénée ou l'UHMWPE (Ultra High Molecular Weight Polyethylen), c'est-à-dire du polyethylène à très haut poids moléculaire (type HOSTALEN) sous forme de poudre) dans la couche d'usure sans perdre les autres propriétés souhaitées).

Ce produit présente une haute tenue thermique (point de "collage" supérieur à 95°C).

On extrude une ML (masse lourde insonorisante) polyoléfine lubrifiée et plastifiée fortement chargée

On double à la calandre la couche d'usure.

On thermoforme le produit vers 150°C (température de surface de la couche d'usure).
- Le produit est bon en abrasion (perte en poids lhomargy inférieur à 30g/m²).
- Le produit présente des caractéristiques de "fogging" particulièrement bonnes (absorption charbon actif (24 heures à 100°C) = perte en poids inférieure à 15 g/m²).
- Le produit ne présente pas de retrait après 4h à 85°C (-inférieur à 1 %).
- Le produit est bon en tenue thermique (> 85°C).

Pour ce procédé, il est avantageux que la pression lors du doublage ne soit pas trop élevée (il faut éviter de cisailler en "cristallisant à froid" la ML (masse lourde insonorisante)). Donc l'adhérence au poste de doublage peut même être inférieure à 0,5 kg/cm. On constate en effet qu'après le passage dans une étuve qui prépare le produit au thermoformage, les couches sont inséparables après ce thermoformage (adhérence supérieure à la cohésion de l'élément le plus faible, c'est-à-dire du produit chargé).

Il y a deux gammes possibles pour la ML. On peut soit avoir une ML très souple de densité ± 2 et de tenue à chaud de ± jusqu'à 80°C. Sa formulation est la suivante :

| | |
|---|---|
| EVA (28 % VA) | 5 parties |
| EVA (19 % VA) | 7,5 parties |
| LLDPE DIUP 5,5 | 1,5 parties |
| Craie/Baryte (1/3 - 2/3) | 80 parties |
| Acide Stéarique | 0,5 parties |

On peut également utiliser une ML souple densité ± 1,7 et de tenue à chaud jusqu'à ± 105°C. Sa formulation est la suivante :

| | |
|---|---|
| EVA | 1,5 parties |
| VLDPE | 14 parties |
| EPDM | 5,5 parties |
| FABRIKATIONEL 100 * SPEZIAL | 8 parties |
| Craie | 70,5 parties |
| Acide Stéarique | 0,5 parties |

huile minérale à caractère non aromatique (plutôt naphténique que paraffinique).

### Exemple 3 Produit thermoformable recyclable à haute tenue thermomécanique (par exemple pour application de tableaux de bord).

Si on souhaite encore augmenter la tenue thermomécanique du produit (par exemple pour l'utilisation en tableau de bord), on modifiera utilement la couche d'usure précédente par exemple selon l'orientation :

| | |
|---|---|
| IOTEK 3110 | → OREVAC PP-CHV |
| IOTEK 8000 | → MELANGE VISTALON 5600 |
| YPAREX 8104E | → IOTEK 7510 |

Pigments, stabilisants et matifiants et autres additifs à façon.

Les proportions sont par exemple :

| | |
|---|---|
| Orévac PP-CHV | 70 parties |
| Vistalon 5600 | 10 parties |
| Iotek 7510 | 20 parties |

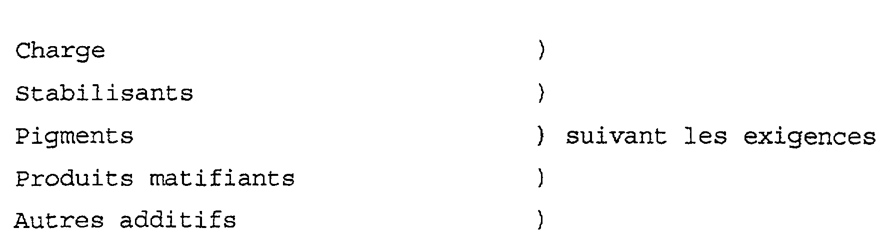

L'Orévac PP est un PP copolymère greffé anhydride moléique à point VICAT élevé (145°C).

Le Vistalon est un EPDM.

L'Iotek 7510 est un ionomère tripolymère ethylène-acrylate de méthyle-acide acrylique de MFI = +/- 1.

L'extrusion se fait à des températures proches de 200°C.

Suivant les applications, on peut mettre en envers une couche sous-jacente chargée, telle que celle de l'exemple 2 (bien entendu, on s'orientera vers une couche chargée à haute tenue à chaud).

Le thermoformage se fait à des températures de l'ordre de 180°C.

Le produit présente d'excellentes performances en tenue à chaud et en abrasion.

### Exemple 4 : (Comparatif) :

Cet exemple vise à mettre en évidence et à chiffrer l'effet bénéfique et paradoxal des couches sous-jacentes chargées sur les adhérences des couches d'ionomères avec les couches sous-jacentes chargées.

L'exemple fait la comparaison des ionomères par rapport à un produit non PVC ayant un très bon comportement à l'abrasion, à savoir l'ELTEX KL 001 P précité.

On a réalisé des films de couche d'usure en 0,5 mm d'épaisseur (extrusion par filière plate) en comparant successivement les quatre produits suivants :

| | |
|---|---|
| 1.) | ELTEX KL 001 P |
| 2.) | IOTEK 8000 |
| 3.) | IOTEK 7030 |
| 4.) | COUCHE D'USURE DE L'EXEMPLE 1. |

On a ensuite extrudé la ML (masse lourde) (selon la première formulation de l'exemple 2) à une température d'extrusion ± 165°C. Il convient de noter qu'en utilisant la deuxième formulation de la ML selon l'exemple 2, les résultats d'adhérence restent comparables, malgré le fait qu'elle contient très peu d'EVA, la seule différence étant qu'il faut extruder à une température légèrement supérieure (de 5 à 10°C).

Durant l'extrusion de la ML, on a doublé à la calandre les différentes couches d'usure en prenant bien soin de ne pas abîmer la ML afin :
- de garder la régularité d'épaisseur sur toute la largeur du cylindre
- de ne pas bloquer la rotation des cylindres de la calandre (par accumulation de matières trop refroidies)
- de maintenir intact les potentiels de thermoformage du composite (et de la ML en particulier). Les conditions de doublage sont rigoureusement identiques.

On a mesuré les adhérences après l'opération de doublage et après opération supplémentaire d'étuvage (1/2 heure à 120°C). L'opération d'étuvage à pour objet de simuler les conditions de chauffage avant le thermoformage (± 150°C).

Il faut préciser qu'il n'y avait pas de poids (donc pas de pression) sur les échantillons en étuve.

Le tableau ci-après reprend le relevé des adhérences (avec la ML) mesurées 1/2 heure après le traitement thermique (adhérence kg/cm) :

| | APRES DOUBLAGE | APRES DOUBLAGE SUIVI D'1 ETUVAGE |
|---|---|---|
| ELTEX KL 001 P | 0,10 - 0,12 | 0,10 - 0,10 |
| IOTEK 8000 | 0,4 - 0,4 | INSEPARABLE* |
| IOTEK 7030 | 0,38 - 0,44 | INSEPARABLE * |
| COUCHE D'USURE EXEMPLE 2 | INSEPARABLE | INSEPARABLE * |

| | | |
|---|---|---|
| * : déchirure de la ML | | |

Les matières ML et la couche d'usure n'ont pas fait l'objet de traitement particulier de protection contre l'humidité.

Après une simple opération de doublage (sous très faible pression), d'une couche d'usure fluide sur une matière fondue on constate :
- L'adhérence des trois composés ionomères est 4 fois plus élevée qu'un PP copolymère qui est la référence en couche d'usure thermoplastique polyoéfine.
- Après étuvage sans aucune pression, qui pourrait simuler soit une expansion de mousse, soit une mise en température de formage, l'adhérence du PP est toujours restée faible alors que les autres couches d'usure ionomères sont devenues indélaminables de leur support.
- Alors que d'après la publication EP-A-0146349, il est constaté que les ionomères traditionnels types sodium n'engendrent pas de bonnes adhérences sur des élastomères polyoéfiniques, on constate que les adhérences des ionomères Zn et Na sont excellentes (sans que les couches doivent être chauffées et pressées à des températures de 200°C).
- De même, les multiples précautions concernant la suppression de l'humidité préconisée dans la publication EP-A-0146349 ne sont pas nécessaires dans notre cas pour les supports chargés . On observe des potentiels d'adhérence très élevés en l'absence de pression, même en présence simplement de la chaleur postérieure à l'opération de doublage. Si la température s'élève (par exemple de 120 à 160°C), il est évident que la durée de chauffage pourra être notablement réduite (par exemple devenir inférieure à la minute).
- Il est donc évident que l'on peut aisément déposer et faire adhérer des poudres ionomères (ou leur précurseurs) par simple chauffage (même superficiel) de ces poudres sur un support (donc sans action spécifique sur la pression).
- Les principes d'adhérence sur support chargé (moussables ou non) permettent donc de manière simple de fabriquer une couche d'usure conforme à l'invention en appliquant par exemple la méthode du dépôt et de fusion de ces poudres sur support chargé (par exemple selon la technique décrite par la demanderesse dans sa demande EP 84102313).

## Revendications

1. Produits composites servant de revêtement de sols ou de murs ou d'habillage intérieur dans le secteur automobile **caractérisés en ce qu'**ils comprennent une couche d'usure comportant au moins un copolymère du type ionomère ou son précurseur et une couche sous-jacente d'une matière polymérique contenant au moins 25 parties en poids d'une charge inorganique choisie dans le groupe formée par la craie (sulfate de calcium), le carbonate de magnesium, la silice pyrogénée, l'hydrate d'aluminium, le kaolin, le sulfate de baryum pour 100 parties en poids de la matière polymérique et contenant de préférence un lubrifiant et/ou un plastifiant et le cas échéant d'autres constituants.

2. Produits selon la revendication 1, **caractérisés en ce que** ladite couche sous-jacente contient au moins 40 parties en poids de ladite charge inorganique.

3. Produits selon la revendication 1 ou 2, **caractérisés en ce que** le taux de charge inorganique dans la couche d'usure est inférieur à 50%.

4. Produits selon l'une quelconque des revendications 1 à 3, **caractérisés en ce que** ladite couche d'usure est transparente pour un décor sous-jacent.

5. Produits selon l'une quelconque des revendications 1 à 4 **caractérisés en ce que** l'ionomère est mis en oeuvre sous forme de son précurseur.

6. Produits selon l'une quelconque des revendications 1 à 5 **caractérisés en ce que** ladite couche sous-jacente comporte des agents de moussage chimiques, expansibles lors d'une étape de passage finale dans un four de gélification classique.

7. Produits selon la revendication 6 **caractérisés en ce que** les agents de moussage sont inhibés localement par des encres inhibitrices.

8. Produits selon l'une quelconque des revendications 1 à 7 **caractérisés en ce que** ladite couche d'usure est appliquée sur une sous-couche pratiquement exempte de constituants chlorés ou azotés.

9. Produit selon l'une quelconque des revendications 1 à 8, **caractérisé en ce que** ladite couche d'usure est appliquée sur une sous-couche à base de constituants polymériques choisis parmi l'EVA, le LLDPE ou le VLDPE.

10. Procédé pour la réalisation des produits selon l'une quelconque des revendications 1 à 9 **caractérisé en ce que** la couche d'usure est appliquée par doublage, en particulier par extrusion ou enduction.

11. Procédé selon la revendication 10 **caractérisé en ce que** la couche d'usure est réalisée au départ de dépôt de poudres qui sont ensuite chauffés, notamment par passage dans un four à air chaud et/ou par infra-rouge.

12. Utilisation des produits composites selon l'une quelconque des revendications 1 à 9 pour des revêtements de sols **caractérisée en ce que** les valeurs de charges de la sous-couche sont comprises entre 25 et 200 et de préférence entre 35 et 70 parties en poids pour 100 parties en poids de matières polymériques.

13. Utilisation des produits composites selon l'une quelconque des revendications 1 à 9 pour des applications d'habillage d'habitacle dans le secteur automobile **caractérisée en ce que** les valeurs de charges de la sous-couche sont comprises entre 25 et 600 parties en poids pour 100 parties en poids de matières polymériques.

## Patentansprüche

1. Verwerkstoffe, die als Boden- oder Wandbeläge, oder als Innenverkleidung im Automobilsektor dienen, **dadurch gekennzeichnet, daß** sie eine Abnutzungsschicht aufweisen, die mindestens ein Copolymer vom ionomeren Typ oder seinen Vorläufer umfaßt, und eine darunterliegende Schicht aus einem polymeren Material aufweisen, das mindestens 25, vorzugsweise mindestens 40 Gewichtsteile eines anorganischen Füllstoffs wie Kreide (Kalziumsulfat) Magnesiumkarbonat, Pyrogensilizium, Aluminiumhydrat, Kaolin und Bariumsulfat pro 100 Gewichtsteile des polymeren Materials enthält und vorzugsweise ein Gleitmittel und/oder einen Weichmacher und gegenfalls andere Bestandteile enthält.

2. Produkte gemäß Anspruch 1, **dadurch gekennzeichnet, daß** die sogenannte darunterliegende Schicht mindestens 40 Gewichtsanteile pro 100 Gewichtsanteile des sogenannten anorganischen Füllstoffs enthält.

3. Produkte gemäß Anspruch 1 oder 2, **dadurch gekennzeichnet, daß** der Anteil an anorganischem Füllstoff bei der Abnutzungsschicht kleiner als 50% ist.

4. Produkte gemäß irgendeinem der Ansprüche 1 bis 3, **dadurch gekennzeichnet, daß** die Abnutzungsschicht transparent ist, damit die darunterliegende Verzierung sichtbar ist.

5. Produkte gemäß irgendeinem der Ansprüche 1 bis 4, **dadurch gekennzeichnet, daß** das Ionomer in Form seines Vorläufers verwendet wird.

6. Produkte gemäß irgendeinem der Ansprüche 1 bis 5, **dadurch gekennzeichnet, daß** die darunterliegende Schicht chemische Treibmittel beinhalten kann, die während einer zweiten Behandlungsstufe in einem Ofen aufgeschäumt werden können.

7. Produkte gemäß irgendeinem der Ansprüche 1 bis 6, **dadurch gekennzeichnet, daß** die chemischen Treibmittelörtlich durch Inhibitoren, die in den Druckfarben enthalten sind, gehemmt werden.

8. Produkte gemäß irgendeinem der Ansprüche 1 bis 7, **dadurch gekennzeichnet, daß** die sogenannte Abnutzungschicht auf eine darunterliegende Schicht aufgetragen wird, welche praktisch frei von chlorierten oder Stickstoffhaltigen Bestandteilen ist.

9. Produkt gemäß irgendeinem der Ansprüche 1 bis 8, **dadurch gekennzeichnet, daß** die Abnutzungsschicht auf eine darunterliegende Schicht auf der Basis von polymeren Bestandteilen aus EVA, LLDPE oder VLDPE aufgebracht wird.

10. Verfahren zur Realisierung der Produkte gemäß irgendeinem der Ansprüche 1 bis 9, **dadurch gekennzeichnet, daß** die Abnutzungsschicht durch Extrusion oder Beschichtung aufgetragen wird.

11. Verfahren gemäß Anspruch 10, **dadurch gekennzeichnet, daß** die Abnutzungsschicht durch Aufbringen von Pulvern verwirklicht wird, die danach durch Einbringung in einem Heißluftofen und/oder Infrarotstrahlungsofen erhitzt werden.

12. Verwendung der Verbundwerkstoffe gemäß irgendeinem der Ansprüche 1 bis 9 für Bodenbeläge, **dadurch gekennzeichnet, daß** die Füllstoffanteile der darunterliegenden Schicht zwischen 25 und 200, vorzugsweise zwischen 35 und 70 Gewichtsteilen pro 100 Gewichtsteile polymere Materialien liegen.

13. Verwendung der Verbundwerkstoffe gemäß irgendeinem der Ansprüche 1 bis 9 für Fahrzeuginnenausstattungen, **dadurch gekennzeichnet, daß** die Füllstoffanteile der darunterliegenden Schicht zwischen 25 und 600 Gewichtsteilen pro 100 Gewichtsteile polymere Materialien liegen.

## Claims

1. Composite products for floor or wall coating or for inner covering in the automotive field **characterized in that** they include a wear layer containing at least one ionomer-type copolymer or the precursor thereof and an underlying layer made of a polymeric material containing at least 25 parts by weight of an inorganic filler selected from the group consisting of chalk (calcium sulfate), magnesium carbonate, pyrogenic silica, aluminum hydrate, kaolin, barium sulfate per 100 parts by weight of the polymeric material, and preferably containing a lubricant and/or a plasticizer and, if appropriate, other constituents.

2. Products according to claim 1, **characterized in that** the underlying layer contains at least 40 parts by weight of said inorganic filler.

3. Products according to claim 1 or 2, **characterized in that** the level of inorganic filler in the wear layer is less than 50 %.

4. Products according to any of claims 1 to 3, **characterized in that** the said wear layer is transparent for an underlying design.

5. Products according to any of claims 1 to 4, **characterized in that** the ionomer is used in the form of its precursor.

6. Products according to any of claims 1 to 5, **characterized in that** the said underlying layer contains chemical foaming agents which can expand during a final stage of passing into a conventional gelling oven.

7. Products according to claim 6, **characterized in that** foaming agents are locally inhibited by inhibitor inks.

8. Products according to any one of claims 1 to 7, **characterized in that** the said wear layer is applied to a base layer which is virtually free of chlorine-containing or nitrogen-containing constituents.

9. Products according to any one of claims 1 to 8, **characterized in that** the said wear layer is applied on a base layer based on polymeric constituents chosen from EVA, LLDPE or VLDPE.

10. Process for production of the products according to any one of claims 1 to 9 **characterized in that** the wear layer is applied by lamination, particularly by extrusion or by coating.

11. Process according to claim 10, **characterized in that** the wear layer is produced starting with deposition of powders which are then heated, in particular by passing into a hot air oven and/or by infrared.

12. Use of the composite products according to any one of claims 1 to 9 for floor coverings, **characterized in that** the filler values for the base layer are between 25 and 200 and preferably between 35 and 70 parts by weight per 100 parts by weight of polymeric materials.

13. Use of the composite products according to any one of claims 1 to 9 for passenger compartment interior trim applications in the automobile sector, **characterized in that** the filler values in the base layer are between 25 and 600 parts by weight per 100 parts by weight of polymeric materials.
